# EUROPEAN PATENT APPLICATION

(11) **EP 4 572 210 A1**
(43) Date of publication of application: **18.06.2025**
(21) Application number: 23851980.5
(22) Date of filing: 11.08.2023
(51) Int. Cl.: H04L 5/00

(54) **CSI REPORTING METHOD, AND TERMINAL DEVICE, NETWORK DEVICE AND STORAGE MEDIUM**

(30) Priority: 12.08.2022 CN 202210970550
(71) Applicant: Datang Mobile Communications Equipment Co., Ltd., Beijing 100085 (CN)
(72) Inventor: HUANG, Qiuping, Beijing 100085 (CN); SONG, Lei, Beijing 100085 (CN); LI, Hui, Beijing 100085 (CN); GAO, Qiubin, Beijing 100085 (CN); LUO, Yajuan, Beijing 100085 (CN); SU, Xin, Beijing 100085 (CN)
(74) Representative: Cabinet Nony
(86) International application number: PCT/CN2023/112503
(87) International publication number: WO 2024/032760

(57) **Abstract**

Provided in the embodiments of the present disclosure are a channel state information (CSI) reporting method, and a terminal device, a network device and a storage medium. The method applied to a terminal device comprises: receiving CSI report indication information, which is sent by a network device; and on the basis of the CSI report indication information, sending uplink-transmission-related information to the network device, wherein the uplink-transmission-related information corresponds to a first parameter set, and the first parameter set comprises one or more of the following: first resources, a first resource set, a first resource setting, a first report configuration or a first beam group.

## Description

### CROSS-REFERENCES TO RELATED APPLICATIONS

The present application claims priority to Chinese patent application No. 202210970550.0 filed on August 12, 2022, entitled "CSI Reporting Method, and Terminal Device, Network Device and Storage Medium", which is hereby incorporated by reference in its entirety.

### FIELD

The present application relates to the field of radio communications, and in particular, to methods and apparatuses for channel state information (CSI) reporting, a terminal device, a network device and a storage medium.

### BACKGROUND

In a new radio (NR) system, each terminal may be configured with multiple antenna panels, and each of the panels corresponds to a beam direction. In the NR system release 17 (Rel-17) protocol and previous versions of the protocol, a terminal may only select one antenna panel for uplink transmission at a moment, that is, only one beam direction may be generated. However, some terminals are configured with multiple antenna panels, allowing the terminal to use multiple antenna panels to perform transmission simultaneously in their respective beam directions. This way helps to improve an uplink transmission rate, improve a reliability of uplink transmission and enhance uplink coverage.

Based on a configuration of a base station, an NR system supports a terminal to report a capability value index while reporting a synchronization signal/physical broadcast channel (PBCH) block resource indicator (SSBRI) or a channel state information reference signal resource indicator (CRI), layer 1 reference signal received power (L1-RSRP) or a layer 1 signal-to-noise and interference ratio (L1-SINR) (i.e., SSBRI/CRI + L1-RSRP/L1-SINR). A capability corresponding to the capability value index is a maximum number of sounding reference signal (SRS) antenna ports that a corresponding antenna panel may support. Different capability value indexes correspond to different maximum number of SRS antenna ports. Specifically, the terminal determines a correspondence between the capability value index and a beam index (for example, a SSBRI or a CRI) by itself. During one beam reporting, the terminal reports a capability value index corresponding to the SSBRI/CRI to the base station when reporting SSBRI/CRI + L1-RSRP/L1-SINR, and the base station may know an uplink antenna panel corresponding to the SSBRI/CRI. In the related art, values of SSBRI/CSI in one CSI report are different, that is, a channel state information reference signal (CSI-RS) resource or an SSB resource may only report one corresponding capability value index, which may also be understood as a CSI-RS or SSB may only report one corresponding capability value index.

Under a mechanism of the related art, in case that a terminal has multiple uplink antenna panels corresponding to a maximum number of SRS antenna ports, all downlink reference signals (DL RS, for example, CSI-RS or SSB) corresponding to these uplink antenna panels report one same capability value index. A base station does not know whether a user equipment (UE) has one uplink antenna panel or multiple uplink antenna panels corresponding to the same capability value index. Therefore, a capability value index in an associated system cannot characterize a specific antenna panel. That is, based on a traditional mechanism, the base station may only know which downlink (DL) reference signals (RSs) may be used as references for an uplink configuration corresponding to which type of a maximum number of SRS antenna ports, and cannot know which DL RSs correspond to which antenna panels. Therefore, the traditional mechanism cannot be used to configure a terminal to perform transmission simultaneously on multiple uplink antenna panels.

### BRIEF SUMMARY

Embodiments of the present application provide methods and apparatuses for channel state information (CSI) reporting, a terminal device, a network device and a storage medium, to solve a problem that a base station cannot know each antenna panel of a terminal corresponding to a reference signal, and enable the base station and the terminal to reach a consensus on a correspondence between a reference signal and each antenna panel of the terminal.

An embodiment of the present application provides a method for channel state information (CSI) reporting, performed by a terminal device, including:
receiving CSI report indication information transmitted from a network device; and
transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, transmitting the uplink transmission related information to the network device based on the CSI report indication information includes:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, transmitting the uplink transmission related information to the network device based on the CSI report indication information includes:
transmitting the uplink transmission related information to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource of one or more for a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

An embodiment of the present application further provides a method for channel state information (CSI) reporting, performed by a network device, including:
transmitting CSI report indication information to a terminal device; and
receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
encoding each piece of sub-information in the fourth information in adjacent bits, and encoding each piece of sub-information in the first information in adjacent bits, where an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

In an embodiment, receiving the uplink transmission related information transmitted from the network device in the group reporting way includes:
encoding the fourth information and the first information in a same group in adjacent bits; or
encoding the fourth information in each group in adjacent bits and encoding the first information in each group in adjacent bits.

An embodiment of the present application further provides a terminal device, including a memory, a transceiver and a processor,
where the memory is used for storing a computer program, the transceiver is used for transmitting and receiving data under control of the processor, and the processor is used for reading the computer program in the memory and performing the following operations:
receiving channel state information (CSI) report indication information transmitted from a network device; and
transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, transmitting the uplink transmission related information to the network device based on the CSI report indication information includes:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, transmitting the uplink transmission related information to the network device based on the CSI report indication information includes:
transmitting the uplink transmission related information to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

An embodiment of the present application further provides a network device, including a memory, a transceiver and a processor,
where the memory is used for storing a computer program, the transceiver is used for transmitting and receiving data under control of the processor, and the processor is used for reading the computer program in the memory and performing the following operations:
transmitting CSI report indication information to a terminal device; and
receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
encoding each piece of sub-information in the fourth information in adjacent bits, and envoding each piece of sub-information in the first information in adjacent bits, where an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

In an embodiment, receiving the uplink transmission related information transmitted from the network device in the group reporting way includes:
encoding the fourth information and the first information in a same group in adjacent bits; or
encoding the fourth information in each group in adjacent bits and encoding the first information in each group in adjacent bits.

An embodiment of the present application further provides an apparatus for channel state information (CSI) reporting, including:
a CSI report indication information receiving unit, used for receiving CSI report indication information transmitted from a network device; and
an uplink transmission related information transmitting unit, used for transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, transmitting the uplink transmission related information to the network device based on the CSI report indication information includes:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, transmitting the uplink transmission related information to the network device based on the CSI report indication information includes:
transmitting the uplink transmission related information to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

An embodiment of the present application further provides an apparatus for channel state information (CSI) reporting, including:
a CSI report indication information transmitting unit, used for transmitting CSI report indication information to a terminal device;
an uplink transmission related information receiving unit, used for receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
encoding each piece of sub-information in the fourth information in adjacent bits, and encoding each piece of sub-information in the first information is encoded in adjacent bits, where an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

In an embodiment, receiving the uplink transmission related information transmitted from the network device in the group reporting way includes:
encoding the fourth information and the first information in a same group in adjacent bits; or
encoding the fourth information in each group in adjacent bits and encoding the first information in each group in adjacent bits.

An embodiment of the present application further provides a processor readable storage medium storing a computer program that causes a processor to perform the method for CSI reporting performed by the terminal device, or perform the method for CSI reporting performed by the network device.

In the methods and apparatuses for channel state information (CSI) reporting, the terminal device, the network device and the storage medium provided by the embodiments of the present application, by transmitting the uplink transmission related information corresponding to one or more of the first resource, the first resource set, the first resource setting, the first report setting, or the first beam group to the network device, the network device may determine the antenna panel corresponding to the reference resource, where the reference resource corresponds to one or more of the first resource, the first resource set, the first resource setting, the first report setting, or the first beam group. The terminal device may use the same antenna panel to transmit and receive signals for the first resource set, the first resource setting, the first report setting, or the first beam group. etc., and the base station and the terminal reach a consensus on the correspondence between the reference signal and each antenna panel of the terminal.

### BRIEF DESCRIPTION OF THE DRAWINGS

In order to illustrate the solutions disclosed in the embodiments of the present application or the related art more clearly, the drawings used in the description of the embodiments of the related art are briefly described below. The drawings in the following description are only some embodiments of the present application, and other drawings may be obtained according to these drawings without any creative work for those skilled in the art.
FIG. 1 is a first schematic flowchart of a method for channel state information (CSI) reporting according to an embodiment of the present application;
FIG. 2 is a second schematic flowchart of a method for CSI reporting according to an embodiment of the present application;
FIG. 3 is a schematic structural diagram of a terminal device according to an embodiment of the present application;
FIG. 4 is a schematic structural diagram of a network device according to an embodiment of the present application;
FIG. 5 is a first schematic flowchart of an apparatus for CSI reporting according to an embodiment of the present application; and
FIG. 6 is a second schematic flowchart of an apparatus for CSI reporting according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In addition, the terms "first", "second", etc. are only used for description purposes, and are used to distinguish features with similarity, and cannot be interpreted as indicating or suggesting relative importance or implicitly indicating the quantity of indicated technical features. Thus, the feature limited with "first" or "second" may explicitly or implicitly include at least one of these features. In the embodiments of the present application, the term "multiple" refers to two or more than two, and other quantifiers are similar.

The phrase "determining B based on A" in the present application means that the factor A should be considered when determining B. Not limited to "determining B based solely on A", it should also include "determining B based on A and C", "determining B based on A, C, and E", "determining C based on A, and further determine B based on C" etc. In addition, it may also include using A as a condition for determining B, for example, "when A satisfies a first condition, using a first method to determine B"; for another example, "in case that A satisfies a second condition, determining B" and so on; for yet another example, "in case that A satisfies a third condition, determining B based on a first parameter" and so on. A may also be used as a condition for determining B, such as "in case that A satisfies the first condition, using the first method to determine C, and further determining B based on C", etc.

The solutions according to the embodiments of the present application may be applicable to various systems, for example, 5^{th} generation (5G) systems, 5G advanced systems, 6^{th} generation (6G) systems and their evolution systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, or other orthogonal frequency division multiplexing (OFDM) systems, discrete Fourier transform-spread-OFDM (DFT-S-OFDM) systems, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by a person of ordinary skill in the art based on the embodiments of the present application without any creative work belong to the scope of the present application.

In a new radio (NR) system, uplink and downlink channels may be transmitted after beamforming to enhance coverage. A direction of the beamforming may be determined by beam scanning for uplink and downlink reference signals, for example, a channel state information reference signal (CSI-RS) or a sounding reference signal (SRS) in different directions are used for beam scanning, and a direction of the reference signal with the best beam quality is selected for uplink or downlink transmission. After the beam directions of different channels are determined, it is necessary to use signaling to indicate a beam during channel transmission, that is, beam indication. Different channels use different beam indication signaling, and beam indication is performed separately for each channel. In this way, different channels may use different beams for transmission. An important scenario in actual applications is that multiple channels use a same beam direction. For example, a physical uplink control channel (PUCCH) and a physical uplink share channel (PUSCH) use a same beam direction. In case that beam reciprocity exists, an uplink channel and a downlink channel may also use a same beam direction. In this case, the above-mentioned separated beam indication way increases a complexity of system and a signaling indication overhead. In order to overcome the above problems, the NR system release 17 (Rel-17) protocol introduces a method of using a beam indication signaling to indicate multiple channel beams, which activates a set of transmission configuration indicator (TCI) states through a medium access control-control element (MAC-CE), and then uses downlink control information (DCI) to indicate one of the activated TCI states. In case that the uplink and downlink channels are reciprocal, a beam indicated by a beam indication signaling may be used for both the uplink channel and the downlink channel; in case that energy leakage occurs due to human body obstruction or a terminal needs to switch an uplink beam, the uplink channel uses a different beam from the downlink channel, and the beam indication signaling needs to indicate the uplink channel beam and the downlink channel beam respectively.

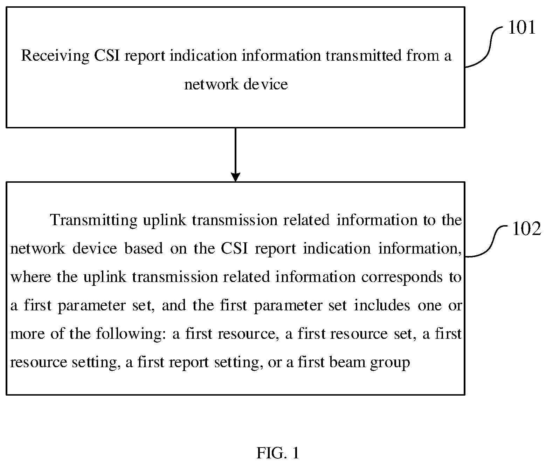

In the NR system Rel-17 protocol and previous versions of the protocol, for a terminal configured with multiple uplink antenna panels, each uplink antenna panel may correspond to same or different maximum quantities of sounding reference signal (SRS) antenna ports. Taking a user equipment (UE) with two antenna panels as an example, in case that the two antenna panels of the UE correspond to the same maximum number of SRS antenna ports, it is impossible to determine which downlink reference signal (DL RS) specifically corresponds to which uplink antenna panel using a capability value index reporting mechanism of Rel-17. In the NR system-related mechanism, a terminal only reports capability value indexes corresponding to a part of CSI-RS or synchronization signal/physical broadcast channel (PBCH) block (SSB). For the reference signal (RS) whose capability value index is not reported, a base station cannot know which antenna panel it corresponds to. Based on the mechanism of Rel-17, for one CSI-RS or one SSB, only one capability value index corresponding to it may be reported, which is not suitable for the scenario where a DL RS corresponds to multiple antenna panels. All the above factors lead to the base station being unable to determine whether an optimal beam corresponding to each DL RS is a beam of one antenna panel or multiple antenna panels when performing beam indication for an uplink simultaneous transmission, and which antenna panel the optimal beam corresponds to, thereby affecting the performance of uplink transmission. In order to solve one or more of the above problems, an embodiment of the present application provides a method for channel state information (CSI) reporting, which is performed by a terminal device. FIG. 1 is a first schematic flowchart of a method for CSI reporting according to an embodiment of the present application. Referring to FIG. 1, the method for CSI reporting provided by the embodiment of the present application includes:
step 101: receiving CSI report indication information transmitted from a network device; and
step 102: transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

The terminal device (that is, a user equipment, UE) receives the CSI report indication information transmitted from the base station. Channel state information is very important and practical data describing a channel in radio communication. In radio communication, the channel state information represents a propagation characteristic of a communication link, which describes a combined influence of multiple effects such as scattering, fading, power attenuation, etc. in a channel. A method for obtaining channel state information includes channel estimation and terminal device feedback. The terminal device is also referred to as a terminal.

In an embodiment, the terminal reports the uplink transmission related information to the base station based on the CSI report indication information, where the uplink transmission related information corresponds to one or more of the first resource, the first resource set, the first resource setting, the first report setting, or the first beam group. In the present application, the terminal device associates the first resource, the first resource set, the first resource setting, the first report setting, or the first beam group with the uplink transmission related information, receives the corresponding first resource, the first resource set, the first resource setting, the first report setting, or the first beam group based on/according to the uplink transmission related information, and reports the uplink transmission related information corresponding to the first resource, the first resource set, the first resource setting, the first report setting, or the first beam group to the base station.

For example, the terminal reports the uplink transmission related information to the base station based on the CSI report indication information, the uplink transmission related information corresponds to the first resource setting (for example, the first resource setting is a resource setting of one or more higher layer parameters, such as *CSI-ResourceConfig*), and all resources in the first resource setting correspond to the same uplink transmission related information. For example, the terminal reports the uplink transmission related information to the base station based on the CSI report indication information, the uplink transmission related information corresponds to the first report setting (for example, the first report setting is a report setting corresponding to one or more higher layer parameters, such as *CSI-ReportConfig*), and all resources in the first report setting correspond to the same uplink transmission related information. For example, the terminal reports the uplink transmission related information to the base station based on the CSI report indication information, the uplink transmission related information corresponds to the first beam group (for example, beam group), and all resources in the first beam group correspond to the same uplink transmission related information.

For example, the uplink transmission related information may be capability information for characterizing an antenna panel, the first resource set may be a reference signal resource set, the capability information for characterizing the antenna panel has a corresponding relationship with the reference signal resource set, and by reporting the capability information for characterizing the antenna panel, the base station and the terminal determine each antenna panel corresponding to the reference signal resource set. In the related art, capability information for characterizing an antenna panel is reported only for a synchronization block resource indicator or a channel state information reference signal resource indicator that reports reference signal received power (RSRP) or a signal-to-interference plus noise ratio (SINR), which makes it impossible for the base station to determine the antenna panel corresponding to other reference signals. Compared with the related art, the solution of the present application enables the UE to use the same antenna panel to perform signal reception or transmission for the first resource, the first resource set, the first resource setting, the first report setting, or the first beam group, and the base station and the terminal reach a consistent understanding of the antenna panel corresponding to an RS for which RSRP/SINR reporting is not performed.

In an embodiment, transmitting the uplink transmission related information to the network device based on the CSI report indication information includes: transmitting the uplink transmission related information to the network device in response to the CSI report indication information. For example, in case that the CSI report indication information indicates that the UE transmits the uplink transmission related information, the UE transmits the uplink transmission related information; and in case that the CSI report indication information indicates that the UE does not transmit the uplink transmission related information/the CSI report indication information does not indicate that the UE transmits the uplink transmission related information, the UE does not transmit the uplink transmission related information.

In an embodiment, transmitting the uplink transmission related information to the network device based on the CSI report indication information includes: determining content of the uplink transmission related information transmitted to the network device based on content indicated by the CSI report indication information. For example, in case that the CSI report indication information indicates that the UE reports the antenna panel corresponding to the DL RS, the UE reports the antenna panel corresponding to the DL RS. For another example, in case that the CSI report indication information indicates that the UE reports the SRS resource set corresponding to the DL RS, the UE reports the SRS resource set corresponding to the DL RS.

The method for CSI reporting provided by the embodiments of the present application at least may be applied to a situation where a UE reports panel associated information. By transmitting the uplink transmission related information corresponding to one or more of the first resource, the first resource set, the first resource setting, the first report setting, or the first beam group to the network device, the network device may determine the antenna panel corresponding to the reference resource corresponding to the first resource, the first resource set, the first resource setting, the first report setting, or the first beam group. The base station and the terminal may reach a consensus on the correspondence between the reference signal and each antenna panel of the terminal.

The embodiments of the present application may also be used for but not limited to a situation where a UE reports TRP associated information. For example, by transmitting the uplink transmission related information corresponding to one or more of the first resource, the first resource set, the first resource setting, the first report setting, or the first beam group to the network device, the network device may determine a TRP corresponding to the reference resource corresponding to the first resource, the first resource set, the first resource setting, the first report setting, or the first beam group. The base station and the terminal may reach a consensus on the correspondence between the reference signal and each antenna panel of the terminal.

In an embodiment, transmitting the uplink transmission related information to the network device based on the CSI report indication information includes:
the CSI report indication information indicates reporting the uplink transmission related information, and transmitting the uplink transmission related information to the network device based on the indication of reporting the uplink transmission related information; or
the CSI report indication information indicates reporting an uplink simultaneous transmission capability, and transmitting the uplink transmission related information to the network device based on the indication of reporting the uplink simultaneous transmission capability.

In an embodiment, the CSI report indication information may indicate the terminal to perform periodic CSI reporting, semi-persistent CSI reporting, or aperiodic CSI reporting. The CSI report indication information includes the following information: information indicating that the terminal reports the uplink transmission related information simultaneously while performing CSI reporting; or information indicating that the terminal reports the uplink simultaneous transmission capability while performing CSI reporting.

In an embodiment, the CSI report indication information indicates reporting an uplink simultaneous transmission capability, and transmitting the uplink transmission related information to the network device based on the indication of reporting the uplink simultaneous transmission capability includes: transmitting the uplink transmission related information to the network device in response to the indication of reporting the uplink simultaneous transmission capability. For example, in case that the CSI report indication information indicates reporting the uplink simultaneous transmission capability, the UE transmits the uplink transmission related information; and in case that the CSI report indication information indicates not reporting the uplink simultaneous transmission capability/the CSI report indication information does not indicate reporting the uplink simultaneous transmission capability, the UE does not transmit the uplink transmission related information.

In an embodiment, the uplink transmission related information is information used to characterize the uplink simultaneous transmission capability. For example, the uplink transmission related information indicates which first resources/first resource sets/first resource settings/first report settings may be used for an uplink simultaneous transmission.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

That is, transmitting the uplink transmission related information is considered to be transmitting the CSI; or, transmitting the uplink transmission related information is independent of the CSI transmission procedure, that is, reporting the uplink transmission related information does not belong to reporting the CSI.

In an embodiment, in case that reporting the uplink transmission related information does not belong to reporting the CSI, the CSI reporting indication information simultaneously indicates that the UE reports the CSI.

In an embodiment, the terminal may perform periodic CSI reporting, semi-persistent CSI reporting, or aperiodic CSI reporting based on the CSI report indication information, and the CSI includes the uplink transmission related information, for example, the uplink transmission related information may be indication information similar to a rank indicator (RI), a pre-coding matrix indicator (PMI), or a channel quality indicator (CQI), and the terminal reports the uplink transmission related information in the same way as reporting other CSI.

In an embodiment, the terminal may report the uplink transmission related information when performing periodic CSI reporting, semi-persistent CSI reporting, or aperiodic CSI reporting based on the CSI report indication information. The terminal may report the uplink transmission related information in the same way as reporting other CSI, but the uplink transmission related information does not belong to CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, the first information may be information corresponding to an antenna panel one-to-one, such as information directly indicating an antenna panel, an antenna panel index (ID), etc. The first information may also be information that does not directly indicate an antenna panel, but may characterize a corresponding antenna panel, such as a control resource set pool index (CORESETPoolIndex), etc. Characterizing the antenna panel by parameters such as an uplink transmission capability value is to implicitly indicate whether the downlink reference signal corresponds to one antenna panel or multiple antenna panels. When the downlink reference signal corresponds to one antenna panel or multiple antenna panels, the corresponding uplink transmission capability values (for example, the maximum number of multiple input multiple output layers supported) may be different. In case that different antenna panels correspond to different uplink transmission capability values, the uplink transmission capability value corresponding to the reference signal resource may also be used to characterize the antenna panel.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the first resource, the first resource set, the first resource setting, the first report setting, or the first beam group may correspond to multiple pieces of first information. For example, the first resource may be a CSI-RS resource, and the first information may be an antenna panel index, then the CSI-RS resource may correspond to antenna panel index 1 or antenna panel index 2. In case of corresponding to multiple first information, the CSI-RS resource may correspond to antenna panel index 1 and antenna panel index 2.

For example, the uplink transmission related information may have a corresponding relationship as shown in the following table.

| A value of a bit in the uplink transmission related information | Meaning |
|---|---|
| 0 | Corresponds to antenna panel index 1 |
| 1 | Corresponds to antenna panel index 2 |

The first resource, the first resource set, the first resource setting, the first report setting, or the first beam group may correspond to the antenna panel index 1 or the antenna panel index 2.

Alternatively, the uplink transmission related information may have a corresponding relationship as shown in the following table.

| A value of a bit in the uplink transmission related information | Meaning |
|---|---|
| 0 | Corresponds to antenna panel index 1 |
| 1 | Corresponds to antenna panel index 2 |
| 2 | Corresponds to antenna panel index 1 and antenna panel index 2 |
| 3 | Reserved |

The first resource, the first resource set, the first resource setting, the first report setting, or the first beam group may correspond to antenna panel index 1, antenna panel index 2, or antenna panel index 1 and antenna panel index 2.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment the uplink transmission related information may include the second information, and the value of the second information may indicate the number of the antenna panel, the TRP index, the SRS resource set, the power control parameter, the uplink transmission capability index, the uplink transmission capability value, or the control resource set pool corresponding to the first resource, the first resource set, the first resource setting, the first report setting, or the first beam group. For example, there is a parameter whose value is an integer in the uplink transmission related information, which is used to indicate the number of antenna panels corresponding to the first resource, the first resource set, the first resource setting, the first report setting, or first beam group.

For example, the uplink transmission related information may have a corresponding relationship as shown in the following table.

| A value of the second information | Meaning |
|---|---|
| 0 | Corresponds to 1 antenna panel |
| 1 | Corresponds to 2 antenna panels |

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the uplink transmission related information may include the third information, and the value of the third information may indicate whether the first resource, the first resource set, the first resource setting, the first report setting, or the first beam group may be used for downlink transmission. For example, the value of the third information indicates that the first resource is only used for downlink transmission, or indicates that the first resource is not used as a reference for uplink transmission, or indicates that a downlink resource corresponding to the first resource set, the first resource setting, the first report setting, or the first beam group is only used for downlink transmission, or indicates that a downlink resource corresponding to the first resource set, the first resource setting, the first report setting, or the first beam group is not used as a reference for uplink transmission.

For example, the uplink transmission related information may have a corresponding relationship as shown in the following table.

| A value of the third information | Meaning |
|---|---|
| 0 | May be used for an uplink transmission and a downlink transmission |
| 1 | Only used for a downlink transmission |

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the third information indicating whether the first resource, the first resource set, the first resource setting, the first report setting, or the first beam group may be used for downlink transmission. The value of the third information may specifically include whether the downlink resource corresponding to the first resource, the first resource set, the first resource setting, or the first report setting may be used as a quasi co-location (QCL) source reference signal for uplink transmission, a source reference signal associated with an uplink transmission space, or a path loss reference signal for uplink transmission. For example, the downlink resource corresponding to the first resource set cannot be used as a QCL source reference signal for uplink transmission, or the downlink resource corresponding to the first resource set cannot be used as a source reference signal associated with the uplink transmission space (for example, QCL Type D); or, the downlink resource corresponding to the first resource set cannot be used as a path loss reference signal for uplink transmission.

In an embodiment, the uplink transmission capability value includes one or more of the following:
a number of SRS ports;
a number of multiple input multiple output (MIMO) layers; or
maximum power.

In an embodiment, the number of SRS ports may be a maximum number of SRS ports. Alternatively, the number of SRS ports may be a number of all supported SRS ports. For example, it may be {1, 2, 4}, and for another example, it may be {1, 2, 4, 8}. The number of MIMO layers may be a maximum number of MIMO layers. Alternatively, the number of MIMO layers may be a number of all supported MIMO layers, for example, it may be {1, 2, 3, 4}, and for another example, it may be {1, 2, 3, 4, 8}.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, the number of SRS ports may be a maximum number of SRS ports. Alternatively, the number of SRS ports may be a number of all supported SRS ports. For example, it may be {1, 2, 4}, and for another example, it may be {1, 2, 4, 8}. The number of MIMO layers may be a maximum number of MIMO layers. Alternatively, the number of MIMO layers may be a number of all supported MIMO layers, for example, it may be {1, 2, 3, 4}, and for another example, it may be {1, 2, 3, 4, 8}.

In an embodiment, transmitting the uplink transmission related information to the network device based on the CSI report indication information includes:
transmitting the uplink transmission related information to the network device in a group reporting way.

In an embodiment, the terminal device may report the uplink transmission related information based on a group and based on the CSI report indication information. For example, in case that the uplink transmission related information belongs to CSI, a group-based CSI reporting is performed. For example, the uplink transmission related information corresponds to the first beam group, and the terminal device transmits the uplink transmission related information corresponding to the first beam group to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the terminal device may not only report the first information corresponding to the resource used for uplink transmission, but also report the first information corresponding to all resources in a group, where the first resource belongs, are used for uplink transmission, and the first information may include at least one of the uplink transmission capability value or the uplink transmission capability index. In this way, the base station and the terminal may reach a consistent understanding of the uplink transmission capability value and/or the uplink transmission capability index corresponding to the reference resource for which RSRP/SINR reporting is not performed.

In an embodiment, the uplink transmission related information includes fourth information, and the fourth information is used to indicate an index of one or more of the following:
a first resource, a first resource set, a first resource setting, a first report setting, or a first beam group.

In an embodiment, the uplink transmission related information may include at least one of an index corresponding to the first resource (for example, an identifier (ID)), an index corresponding to the first resource set, an index corresponding to the first resource setting, an index corresponding to the first report setting, or an index corresponding to the first beam group. For example, the terminal reports the uplink transmission related information corresponding to the first resource set, and indicates an identifier of a corresponding first resource set in the uplink transmission related information, for example, through an index such as an ID or an indication of a position corresponding to the first resource set.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order for transmitting the uplink transmission related information is determined based on the order of the first resource, the first resource set, the first resource setting, the first report setting, or the first beam group. For example, the order for transmitting the uplink transmission related information corresponds to the order of the first resource sets, and specifically, the order of the first resource sets may be an order of their indexes. Alternatively, the order for transmitting the uplink transmission related information corresponds to the order of the first resource settings, and specifically, the order of the first resource settings may be the order of their indexes. In case that the order for transmitting the uplink transmission related information corresponds to the order of the first resource, the first resource set, the first resource setting, the first report setting, or the first beam group, the fourth information may not be included in the uplink transmission related information, that is, the index of the first resource, the index of the first resource set, the index of the first resource setting, the index of the first report setting, or the index of the first beam group is not reported.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the order for transmitting the uplink transmission related information may be determined based on the order of the first resource, the first resource set, the first resource setting, the first report setting, or the first beam group. For example, in case that the first resource is a reference signal resource, the order for transmitting the uplink transmission related information is determined based on the size order of the identifiers of the reference signal resource. For example, the indexes of the first resource sets are sorted in order from large to small, the first uplink transmission related information transmitted corresponds to the first resource set with the smallest index, the second uplink transmission related information transmitted corresponds to the first resource set with the second smallest index, and so on. Alternatively, the first resource sets are sorted in the order of the corresponding resource settings, the first uplink transmission related information transmitted corresponds to the first resource set corresponding to the first resource setting, the second uplink transmission related information transmitted corresponds to the first resource set corresponding to the second resource setting, and so on. Alternatively, the first resource sets are sorted in the order in which the first resource set is configured in the corresponding resource setting, the first uplink transmission related information transmitted corresponds to the first resource set configured as the first in the corresponding resource setting, the second uplink transmission related information transmitted corresponds to the first resource set configured as the second in the corresponding resource setting, and so on. The order for transmitting the uplink transmission related information may be determined based on a similar scheme. The order for transmitting the uplink transmission related information includes but is not limited to the transmission order determined based on the order of the first resource, the first resource set, the first resource setting, the first report setting, or the first beam group, as long as the order for transmitting the uplink transmission related information may be used to determine the corresponding first resource, first resource set, first resource setting, first report setting, or first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, in the procedure of determining the order for transmitting the uplink transmission related information, the first resource set may be sorted based on the order of the index of the corresponding second resource, the first uplink transmission related information transmitted corresponds to the first resource set whose corresponding second resource has an index ranked first, the second uplink transmission related information transmitted corresponds to the first resource set whose corresponding second resource has an index ranked second, and so on. The second resource is a resource for one or more of the CSI report identifier, the channel quality, the PMI, the RI, or the CQI. Alternatively, the first report setting is sorted based on the order of the index of the corresponding second resource set, the first uplink transmission related information transmitted corresponds to the first resource set whose corresponding second resource set has an index ranked first, the second uplink transmission related information transmitted corresponds to the first resource set whose corresponding second resource set has an index ranked second, and so on. The second resource set is a resource set for at least one of the CSI report identifier, the channel quality, the PMI, the RI, the CQI, or the corresponding resource identifier.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, the first resource corresponding to the uplink transmission related information reported by the terminal may be a resource for at least one of the CSI report identifier, the channel quality, the pre-coding matrix indicator (PMI), the rank indicator (RI), or the channel quality indicator (CQI), and the channel quality may be reference signal received power (RSRP), a reference signal received quality (RSRQ), or a signal-to-interference plus noise ratio (SINR), etc. The first resource may be a CSI-RS resource, SSB, etc. The first resource set may be a CSI resource set for channel measurement corresponding to the CSI report. The first resource setting may be a CSI resource setting for channel measurement corresponding to the CSI report. The first report setting may be a CSI report setting corresponding to the CSI report. The first beam group corresponding to the uplink transmission related information reported by the terminal may be a resource for one or more of the beam group identifier, the channel quality, the PMI, the RI, or the CQI reported in the CSI, and the channel quality may be RSRP, an RSRQ, or an SINR, etc.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, the fourth information and the first information may be encoded independently, and a position of each piece of the first information in the encoding corresponds to a position of each piece of the fourth information in the encoding one by one. For example, in case that the fourth information is a CRI and the first information is an antenna panel index, encoding positions of the fourth information and the first information may be as follows.
{CRI 1, CRI 2, ...} ... {panel 1, panel 2, ...} ...

For example, in case that the fourth information is a CRI and RSRP, and the first information is an antenna panel index, encoding positions of the fourth information and the first information may be as follows.
{CRI **1,** CRI 2, ...} ... {RSRP 1, RSRP 2, ...} ... {panel 1, panel 2, ...} ...

The fourth information and the first information may be jointly encoded, and a position of each piece of the first information in the encoding and a position of each piece of the fourth information in the encoding are in adjacent bits. For example, in case that the fourth information is a CRI and the first information is an antenna panel index, encoding positions of the fourth information and the first information may be as follows.
{CRI 1-panel 1, CRI 2-panel 2, ...} ...

The way of jointly encoding the fourth information and the first information may be to jointly feed back first information corresponding to each piece of fourth information through one information, and one codepoint of the information simultaneously indicates the first information corresponding to each piece of the fourth information. For example, in case that the fourth information is a CRI/SSBRI and the first information is an antenna panel index, the terminal reports N CRI/SSBRIs and their corresponding antenna panel indexes, where N is a positive integer. Taking N=2 as an example, one encoding way of the information is as follows.

| A value of the codepoint | Meaning |
|---|---|
| 0 | CRI/SSBRI 1 corresponds to Panel 1, CRI/SSBRI 2 corresponds to Panel 2 |
| 1 | CRI/SSBRI 1 corresponds to Panel 1, CRI/SSBRI 2 corresponds to Panel 1 |
| 2 | CRI/SSBRI 1 corresponds to Panel 2, CRI/SSBRI 2 corresponds to Panel 1 |
| 3 | CRI/SSBRI 1 corresponds to Panel 2, CRI/SSBRI 2 corresponds to Panel 2 |

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

In an embodiment, the terminal may transmit the uplink transmission related information to the base station in the group reporting way. In this case, the fourth information and the first information reported in the same group are jointly encoded, or encoded in adjacent bits. For example, in case that the fourth information is a CRI and RSRP, the first information is an antenna panel index, and two groups of beam information are reported, encoding positions of the fourth information and the first information may be as follows:
{CRI 1, CRI 2, ...} corresponding to the first group...
{panel 1, panel 2, ...} corresponding to the first group...
{CRI 1, CRI 2, ...} corresponding to the second group...
{panel 1, panel 2, ...} corresponding to the second group.

Alternatively, encoding positions of the fourth information and the first information may be as follows:
{CRI 1, CRI 2, ...} corresponding to the first group
{CRI 1, CRI 2, ...} corresponding to the second group
{panel 1, panel 2, ...} corresponding to the first group.
{panel 1, panel 2, ...} corresponding to the second group.

In the method for CSI reporting provided by the embodiments of the present application, a problem that a base station cannot know antenna panels of a terminal corresponding to a reference signal is solved, and the base station and the terminal reach a consensus on the correspondence between the reference signal and the antenna panels of the terminal. A method for CSI reporting performed by a network device side is described below. It may be appreciated by those skilled in the art that the method for CSI reporting performed by the network device side corresponds to the method for CSI reporting performed by the terminal device side, and may achieve corresponding effects.

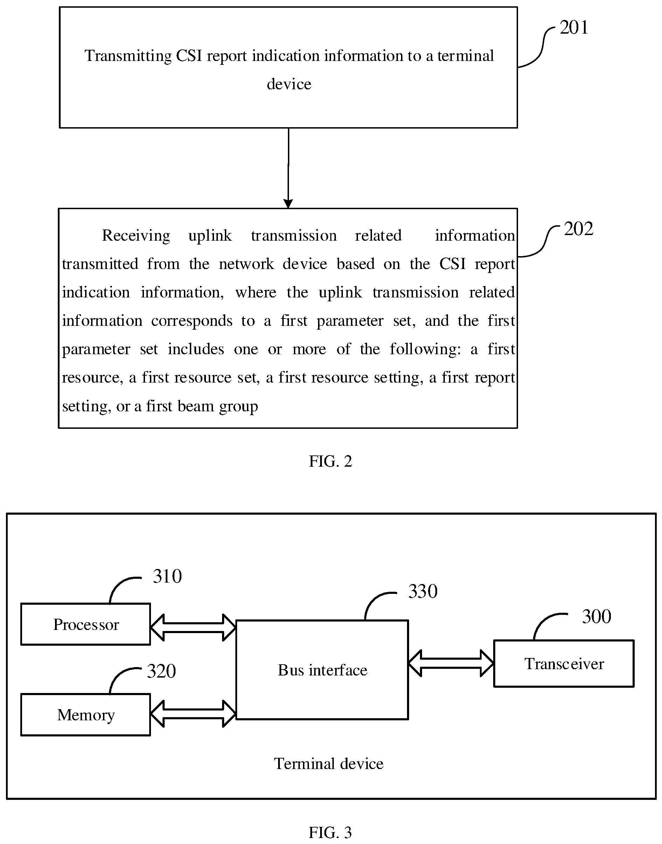

FIG. 2 is a second schematic flowchart of a method for CSI reporting according to an embodiment of the present application. An embodiment of the present application provides a method for CSI reporting, performed by a network device, including:
step 201: transmitting CSI report indication information to a terminal device; and
step 202: receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the CSI report indication information may indicate the terminal to perform periodic CSI reporting, or semi-persistent CSI reporting, or aperiodic CSI reporting.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the base station may carry, through different bits of a same signaling, information indicating that the terminal reports the uplink simultaneous transmission capability when performing CSI reporting. Alternatively, the base station may carry, through two signalings respectively, information indicating that the terminal reports the uplink simultaneous transmission capability when performing CSI. Alternatively, the signaling may be an RRC signaling, an MAC-CE signaling, or a DCI signaling. For example, the base station carries, through the DCI signaling, information indicating that terminal reports the uplink transmission related information when performing aperiodic CSI reporting; or, the base station carries, through the RRC signaling, information indicating that the terminal reports the uplink transmission related information when performing semi-persistent CSI reporting. The base station may simultaneously transmit indication information for indicating the terminal to perform CSI reporting and information indicating that the terminal reports the uplink transmission related information when performing CSI reporting, or may transmit, at different moments, indication information for indicating the terminal to perform CSI reporting and information indicating that the terminal reports the uplink transmission related information when performing CSI reporting.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
encoding each piece of sub-information in the fourth information in adjacent bits, and encoding each piece of sub-information in the first information in adjacent bits, where an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

In an embodiment, receiving the uplink transmission related information transmitted from the network device in the group reporting way includes:
encoding the fourth information and the first information in a same group in adjacent bits; or
encoding the fourth information in each group in adjacent bits and encoding the first information in each group in adjacent bits.

The methods provided in the embodiments of the present application are based on the same conception, and the implementation of the methods performed by the terminal device side and the network device side may be referred to each other, and the same part is not repeated.

The methods provided by the above embodiments of the present application are illustrated below through specific embodiments.

Embodiment 1: uplink transmission related information corresponds to a first resource, the first resource is a CSI-RS resource or SSB, fourth information is a CRI or SSBRI, and a UE also reports RSRP or an SINR corresponding to the first resource in CSI.

CSI report indication information indicates the UE to perform CSI feedback for multiple resources, and the UE reports multiple CRI/SSBRIs and their corresponding uplink transmission related information. The fourth information and first information are independently encoded, and a position of each piece of the first information in the encoding corresponds to a position of each piece of the fourth information in the encoding one by one. Encoding positions of the fourth information and the first information are as follows.
{CRI 1, CRI 2, ...} ... {RSRP 1, RSRP 2, ...} ... {panel 1, panel 2, ...} ...

The uplink transmission related information includes multiple pieces of first information, that is, the uplink transmission related information indicates that the first resource corresponds to multiple pieces of first information.

Third information indicates that the first resource is not used as a reference for uplink transmission, that is, the first resource is only used for downlink transmission. In an embodiment, the third information indicates that the first resource cannot be used as a QCL source reference signal for uplink transmission.

Embodiment 2: uplink transmission related information corresponds to a first resource set, and the first resource set is a CSI resource set for channel measurement corresponding to CSI. It is assumed that CSI reporting is reporting corresponding to CSI reporting 1, and CSI reporting 1 is associated with a scenario where one or more CSI resource sets are used for channel measurement. One way is that CSI reporting 1 is associated with a resource setting for channel measurement, and the resource setting is associated with one or more CSI resource sets for channel measurement. Another way is that CSI reporting 1 is associated with multiple resource settings for channel measurement, and each resource setting is associated with one or more CSI resource sets for channel measurement.

CSI report indication information indicates that the UE simultaneously reports the uplink transmission related information corresponding to multiple CSI resource sets for channel measurement while reporting, that is, multiple first resource sets. All CSI-RS resources or SSBs in each first resource set correspond to same uplink transmission related information and also correspond to same first information.

The first resource set is a resource set where one or more of resources of a CSI report identifier, a channel quality, a PMI, an RI, or a CQI are located. For example, it is assumed that CSI reporting 1 is associated with CSI resource set 1 and CSI resource set 2. In case that the UE only reports RSRP corresponding to the CSI-RS resource/SSB in CSI resource set 1, the UE only reports the uplink transmission related information corresponding to CSI resource set 1.

In an embodiment, the UE reports the uplink transmission related information corresponding to all CSI resource sets for channel measurement associated with CSI reporting 1.

In an embodiment, the UE reports the uplink transmission related information for part of CSI resource sets associated with CSI reporting 1, and simultaneously indicates identifiers of corresponding CSI resource sets (indicated by IDs or positions in multiple CSI resource sets, etc.).

In an embodiment, first indication information indicates multiple pieces of uplink transmission related information and the first information included therein, that is, the uplink transmission related information may indicate that the first resource set corresponds to multiple pieces of first information.

In an embodiment, the uplink transmission related information indicates that the first resource set does not correspond to first information on uplink. In an embodiment, all CSI-RS/SSB resources in the first resource set may only be used for downlink transmission, or all CSI-RS/SSB resources in the first resource set cannot be used as a reference for uplink transmission, which may also be understood as all CSI-RS/SSB resources in the first resource set may only be used as QCL source reference signals for downlink transmission. In an embodiment, all CSI-RS/SSB resources in the first resource set that have been performed with channel quality reporting may only be used for downlink transmission, or all CSI-RS/SSB resources in the first resource set that have been performed with channel quality reporting cannot be used as a reference for uplink transmission, which can also be understood as all CSI-RS/SSB resources in the first resource set that have been performed with channel quality reporting may only be used as QCL source reference signals for downlink transmission.

In an embodiment, the UE indicates to the base station that the UE has reported the uplink transmission related information for the CSI resource set when performing CSI reporting.

Embodiment 3: uplink transmission related information corresponds to a first report setting.

Assuming that CSI reporting is reporting corresponding to CSI reporting 1, a UE reports the uplink transmission related information corresponding to a CSI report setting and first information included in the uplink transmission related information while performing CSI reporting. All CSI-RS resources/SSBs in a CSI resource set, for channel measurement, and corresponding to the CSI reporting, in the CSI report setting correspond to a same antenna panel.

In an embodiment, the uplink transmission related information indicates that multiple pieces of first information correspond to the first report setting, that is, the uplink transmission related information may indicate that the first report setting corresponds to multiple antenna panels.

In an embodiment, the uplink transmission related information indicates that first reporting (CSI reporting) does not correspond to an antenna panel for uplink. In an embodiment, the CSI-RS resources/SSBs in the CSI resource set for channel measurement associated with the first reporting may only be used for downlink transmission, or the CSI-RS resources/SSBs in the CSI resource set for channel measurement associated with the first reporting cannot be used as a reference for uplink transmission. It may also be understood that the CSI-RS resources/SSBs in the CSI resource set for channel measurement associated with the first reporting may only be used as QCL source reference signals for downlink transmission. In an embodiment, the CSI-RS resources/SSBs that have been performed with channel quality reporting in the CSI resource set for channel measurement associated with the first report may only be used for downlink transmission, or the CSI-RS resources/SSBs that have been performed with channel quality reporting in the CSI resource set for channel measurement associated with the first reporting cannot be used as references for uplink transmission. It may also be understood that the CSI-RS resources/SSBs that have been performed with channel quality reporting in the CSI resource set for channel measurement associated with the first report may only be used as QCL source reference signals for downlink transmission.

In an embodiment, the UE indicates to the base station that the UE has reported the uplink transmission related information and the first information included in the uplink transmission related information when performing CSI reporting.

Embodiment 4: uplink transmission related information corresponding ti a first beam group is taken as an example.

Assuming that a UE reports multiple groups of CRI/SSBRI information, the UE simultaneously reports the uplink transmission related information corresponding to each group of CRI/SSBRI information and the first information included in the uplink transmission related information. A same group of CRI/SSBRI corresponds to a same antenna panel.

In an embodiment, the first indication information indicates multiple pieces of uplink transmission related information and the first information included in the multiple pieces of uplink transmission related information, that is, the uplink transmission related information may indicate that the first reporting corresponds to multiple antenna panels.

In an embodiment, the uplink transmission related information indicates that a first beam group does not correspond to an antenna panel for uplink. That is, in an embodiment, CSI-RS resources/SSBs included in the first beam group may only be used for downlink transmission, or CSI-RS resources/SSBs included in the first beam group cannot be used as a reference for uplink transmission. It may also be understood that the CSI-RS resources/SSBs included in the first beam group may only be used as QCL source reference signals for downlink transmission. In an embodiment, the CSI-RS resources/SSBs in the CSI resource set for channel measurement corresponding to the first beam group may only be used for downlink transmission, or the CSI-RS resources/SSBs in the CSI resource set for channel measurement corresponding to the first beam group cannot be used as a reference for uplink transmission. It can also be understood that the CSI-RS resources/SSBs in the CSI resource set for channel measurement corresponding to the first beam group may only be used as QCL source reference signals for downlink transmission.

In an embodiment, the UE indicates to the base station that the UE has reported the uplink transmission related information corresponding to the beam group and the first information included in uplink transmission related information when reporting CSI.

Embodiment 5: first information is CORESETPoolIndex, and uplink transmission related information corresponding to a first resource is taken as an example. In an embodiment, a UE reports a CRI (in case that the first resource is a CSI-RS resource) or an SSBRI (in case that the first resource is an SSB) and CORESETPoolIndex corresponding to the SSBRI. In an embodiment, the UE also reports RSRP or RSRP corresponding to the first resource.

In an embodiment, CSI reporting indication information indicates that the UE performs CSI feedback for multiple resources. The UE reports multiple CRIs/SSBRIs and their corresponding first information.

First information is a transmission capability index value and an uplink transmission capability is taken as an example. In an embodiment, when the UE reports the CRI (in case that the first resource is a CSI-RS resource)/SSBRI (in case that the first resource is an SSB) corresponding to the first resource, an uplink transmission capability index value and the uplink transmission capability are indicated through the first information. The fourth information and the first information are encoded independently, and a position of each piece of the first information in the encoding corresponds to a position of each piece of the fourth information in the encoding one by one. Encoding positions of the fourth information and the first information may be as follows.
{CRI 1, CRI 2,...} ... {CORESETPoolIndex 1, CORESETPoolIndex 2, ...} ...

In the above encoding positions, CORESETPoolIndex 1 corresponds to CRI 1, CORESETPoolIndex 2 corresponds to CRI 2, and so on.

In an embodiment, the uplink transmission capability index value corresponds to a maximum number of SRS ports, and the uplink transmission capability is a maximum number of MIMO layers during an uplink simultaneous transmission.

In an embodiment, the maximum number of MIMO layers during the uplink simultaneous transmission may be different from a maximum number of MIMO layers during a non-uplink simultaneous transmission (when only one antenna panel is transmitting).

The above examples are given by taking the first information as an uplink transmission capability index value and an uplink transmission capability, etc. as examples. The present application is also applicable to other situations where the first information is one or more of an antenna panel ID, a TRP ID, an SRS resource set, a power control parameter, an uplink transmission capability index, an uplink transmission capability value, or a CORESETPoolIndex.

FIG. 3 is a schematic structural diagram of a terminal device according to an embodiment of the present application. As shown in FIG. 3, the terminal device includes a memory 320, a transceiver 300 and a processor 310, where
the memory 320 is used for storing a computer program, the transceiver 300 is used for receiving and transmitting data under control of the processor 310, and the processor 310 is used for reading the computer program in the memory 320 and performing the following operations:
receiving CSI report indication information transmitted from a network device; and
transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the transceiver 300 is used for receiving and transmitting data under control of the processor 310. In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. The bus interface 330 provides an interface. The transceiver 300 may include multiple elements, i.e., including a transmitter and a receiver, units for providing communication with various other devices over transmission media including wireless channels, wired channels, fiber optic cables, and the like. The processor 310 is responsible for managing the bus architecture and general processing, and the memory 320 may store data used by the processor 310 when performing operations.

The processor 310 may be a central processing unit (CPU), an application specific integrated circuit (ASIC), a field-programmable gate array (FPGA), or a complex programmable logic device (CPLD), the processor may also use a multi-core architecture.

In an embodiment, transmitting the uplink transmission related information to the network device based on the CSI report indication information includes:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, transmitting the uplink transmission related information to the network device based on the CSI report indication information includes:
transmitting the uplink transmission related information to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

It should be noted here that the above terminal device provided by the embodiments of the present application may implement all the method steps implemented by the above method embodiments performed by the terminal device, and may achieve the same effect. The same parts and beneficial effects as the same method embodiments are not repeated in the present application.

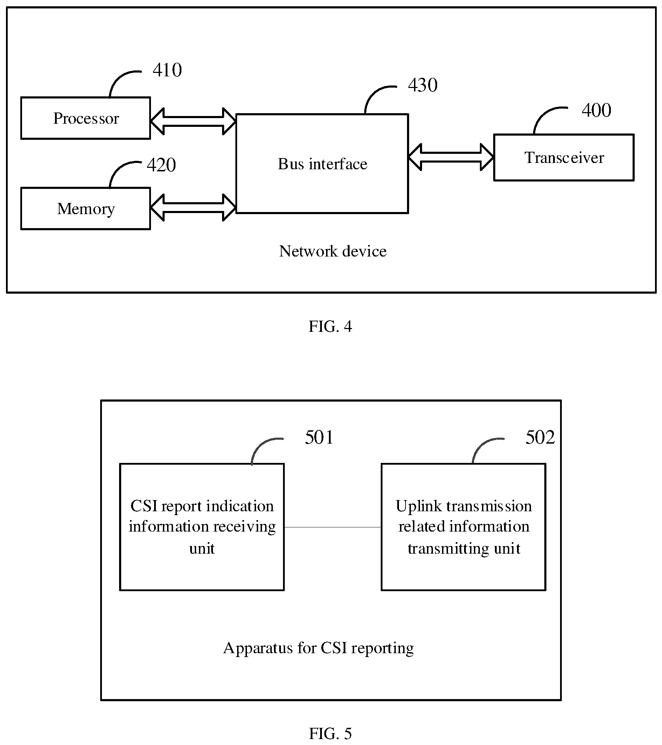

FIG. 4 is a schematic structural diagram of a network device according to an embodiment of the present application. As shown in FIG. 4, the network device includes a memory 420, a transceiver 400 and a processor 410, where
the memory 420 is used for storing a computer program, the transceiver 400 is used for receiving and transmitting data under control of the processor 410, and the processor 410 is used for reading the computer program in the memory 420 and performing the following operations:
transmitting CSI report indication information to a terminal device; and
receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

In an embodiment, the transceiver 400 is used for receiving and transmitting data under control of the processor 410. In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface 430 provides an interface. The transceiver 400 may include multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
encoding each piece of sub-information in the fourth information in adjacent bits, and encoding each piece of sub-information in the first information in adjacent bits, where an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

In an embodiment, receiving the uplink transmission related information transmitted from the network device in the group reporting way includes:
encoding the fourth information and the first information in a same group in adjacent bits; or
encoding the fourth information in each group in adjacent bits and encoding the first information in each group in adjacent bits.

It should be noted here that the above network device provided by the embodiments of the present application may implement all the method steps implemented by the above method embodiments performed by the network device, and may achieve the same effect. The same parts and beneficial effects as the same method embodiments are not repeated in the present application.

Embodiments of the present application provide methods and apparatuses for CSI reporting, where the methods and apparatuses are based on the same conception, since the principles for solving the problems by the methods and the apparatuses are similar, the implementation of the apparatuses and the methods may be referred to each other, and the same part is not repeated.

FIG. 5 is a first schematic flowchart of an apparatus for CSI reporting according to an embodiment of the present application. Referring to FIG. 5, the apparatus for CSI reporting provided by an embodiment of the present application is for use in a terminal device, including:
a CSI report indication information receiving unit 501, used for receiving CSI report indication information transmitted from a network device; and
an uplink transmission related information transmitting unit 502, used for transmitting uplink transmission related information to the network device based on the CSI report indication information, where the uplink transmission related information corresponds to a first parameter set, and the first parameter set includes one or more of the following:
   a first resource, a first resource set, a first resource setting, a first report setting, or a first beam group.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, transmitting the uplink transmission related information to the network device based on the CSI report indication information includes:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

In an embodiment, transmitting the uplink transmission related information to the network device based on the CSI report indication information includes:
transmitting CSI to the network device based on the CSI report indication information, where the CSI includes the uplink transmission related information; or
transmitting, based on the CSI report indication information, the uplink transmission related information and CSI to the network device simultaneously.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes an index of an uplink transmission capability corresponding to one or more of the following:
a number of SRS ports;
a number of multiple input multiple output (MIMO) layers; or
maximum power.

In an embodiment, transmitting the uplink transmission related information to the network device based on the CSI report indication information includes:
transmitting the uplink transmission related information to the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, transmitting the uplink transmission related information to the network device based on the CSI report indication information includes:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, transmitting the uplink transmission related information to the network device includes:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to the each piece of sub-information in the fourth information in adjacent bits.

In an embodiment, transmitting the uplink transmission related information to the network device in the group reporting way includes:
encoding the fourth information and the first information in a same group in adjacent bits; or
encoding the fourth information in each group in adjacent bits and encoding the first information in each group in adjacent bits.

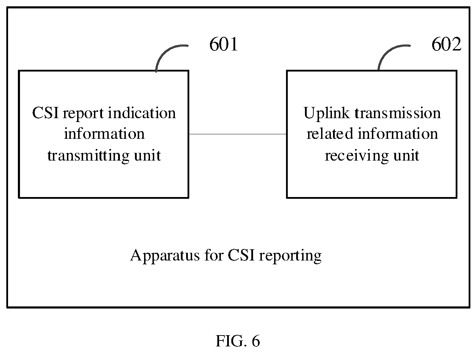

FIG. 6 is a second schematic flowchart of an apparatus for CSI reporting according to an embodiment of the present application. Referring to FIG. 6, the apparatus for CSI reporting provided by an embodiment of the present application is for use in a network device, including:
a CSI report indication information transmitting unit 601, used for transmitting CSI report indication information to a terminal device; and
an uplink transmission related information receiving unit 602, used for receiving uplink transmission related information transmitted from the network device based on the CSI report indication information, where the uplink transmission related information corresponds to a first parameter set, and the first parameter set includes one or more of the following:
   a first resource, a first resource set, a first resource setting, a first report setting, or a first beam group.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

In an embodiment, the CSI report indication information includes:
first indication information, where the first indication information is used to indicate the terminal device to transmit the uplink transmission related information to the network device; or
second indication information, where the second indication information is used to indicate the terminal device to transmit an uplink simultaneous transmission capability to the network device.

In an embodiment, the CSI report indication information includes:
third indication information, where the third indication information is used to indicate the terminal device to transmit CSI, and the CSI includes the uplink transmission related information; or
fourth indication information, where the fourth indication information is used to indicate the terminal device to transmit the uplink transmission related information when transmitting CSI.

In an embodiment, the uplink transmission related information includes first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

In an embodiment, multiple pieces of first information included in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

In an embodiment, the uplink transmission related information includes second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

In an embodiment, the uplink transmission related information includes third information, and the third information is used to indicate whether one or more of the following are used for uplink transmission:
a first resource, a first resource set, a first resource setting, a first report setting, or a first beam group.

In an embodiment, the third information includes information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

In an embodiment, the uplink transmission capability value includes one or more of the following:
a number of SRS ports;
a number of multiple input multiple output (MIMO) layers; or
maximum power.

In an embodiment, the uplink transmission capability index includes one or more of the following:
a number of SRS ports;
a number of multiple input multiple output (MIMO) layers; or
maximum power.

In an embodiment, receiving the uplink transmission related information transmitted from the network device based on the CSI report indication information includes:
receiving the uplink transmission related information transmitted from the network device in a group reporting way.

In an embodiment, an uplink transmission capability value and/or an uplink transmission capability index corresponding to the first resource includes:
an uplink transmission capability value and/or an uplink transmission capability index corresponding to the first resource in case that all resources in a group where the first resource belongs are used for uplink transmission.

In an embodiment, the uplink transmission related information includes fourth information, and the fourth information is used to indicate an index of one or more of the following:
a first resource, a first resource set, a first resource setting, a first report setting, or a first beam group.

In an embodiment, receiving the uplink transmission related information transmitted from the network device based on the CSI report indication information includes:
receiving the uplink transmission related information transmitted based on an order for transmitting the uplink transmission related information,
where the order for transmitting the uplink transmission related information is determined based on an order of one or more of a first resource, a first resource set, a first resource setting, a first report setting, or a first beam group.

In an embodiment, the order of one or more of the first resource, the first resource set, the first resource setting, the first report setting, or the first beam group includes one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

In an embodiment, the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

In an embodiment, the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

In an embodiment, receiving the uplink transmission related information transmitted from the network device includes:
each piece of sub-information in the fourth information is encoded in adjacent bits, each piece of sub-information in the first information is encoded in adjacent bits, and an encoding order of each piece of the sub-information in the fourth information corresponds to an encoding order of each piece of the sub-information in the first information one by one; or
each piece of sub-information in the fourth information and each piece of sub-information in the first information corresponding to the each piece of sub-information in the fourth information are encoded in adjacent bits.

In an embodiment, receiving the uplink transmission related information transmitted from the network device in the group reporting way includes:
the fourth information and the first information in a same group are encoded in adjacent bits; or
the fourth information in each group is encoded in adjacent bits and the first information in each group is encoded in adjacent bits.

An embodiment of the present application further provides a processor readable storage medium storing a computer program that causes a processor to perform the above-mentioned methods for CSI reporting provided by the embodiments of the present application.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for channel state information (CSI) reporting, performed by a terminal device, comprising:
receiving CSI report indication information transmitted from a network device; and
transmitting uplink transmission related information to the network device based on the CSI report indication information, wherein the uplink transmission related information corresponds to a first parameter set, and the first parameter set comprises one or more of the following:
a first resource, a first resource set, a first resource setting, a first report setting, or a first beam group.

2. The method of claim 1, wherein transmitting the uplink transmission related information to the network device based on the CSI report indication information comprises:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

3. The method of claim 1, wherein transmitting the uplink transmission related information to the network device based on the CSI report indication information comprises:
transmitting CSI to the network device based on the CSI report indication information, wherein the CSI comprises the uplink transmission related information; or
transmitting, based on the CSI report indication information, the uplink transmission related information and CSI to the network device simultaneously.

4. The method of any of claims 1 to 3, wherein the uplink transmission related information comprises first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

5. The method of claim 4, wherein multiple pieces of first information comprised in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

6. The method of claim 4, wherein the uplink transmission related information comprises second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

7. The method of any of claims 4 to 6, wherein the uplink transmission related information comprises third information, and the third information is used to indicate whether one or more of the following are used for uplink transmission:
a first resource, a first resource set, a first resource setting, a first report setting, or a first beam group.

8. The method of claim 7, wherein the third information comprises information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

9. The method of claim 4, wherein the uplink transmission capability value comprises one or more of the following:
a number of SRS ports;
a number of multiple input multiple output (MIMO) layers; or
maximum power.

10. The method of claim 4, wherein the uplink transmission capability index comprises an index of uplink transmission capability corresponding to one or more of the following:
a number of SRS ports;
a number of multiple input multiple output (MIMO) layers; or
maximum power.

11. The method of claim 4, wherein transmitting the uplink transmission related information to the network device based on the CSI report indication information comprises:
transmitting the uplink transmission related information to the network device in a group reporting way.

12. The method of claim 11, wherein an uplink transmission capability value and/or an uplink transmission capability index corresponding to the first resource comprises:
an uplink transmission capability value and/or an uplink transmission capability index corresponding to the first resource in case that all resources in a group where the first resource belongs are used for uplink transmission.

13. The method of any of claims 7 to 11, wherein the uplink transmission related information comprises fourth information, and the fourth information is used to indicate an index of one or more of the following:
a first resource, a first resource set, a first resource setting, a first report setting, or a first beam group.

14. The method of claim 4, wherein transmitting the uplink transmission related information to the network device based on the CSI report indication information comprises:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

15. The method of claim 14, wherein the order of one or more of the first resource, the first resource set, the first resource setting, the first report setting, or the first beam group comprises one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

16. The method of claim 15, wherein the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

17. The method of claim 1, wherein the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

18. The method of claim 13, wherein transmitting the uplink transmission related information to the network device comprises:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

19. The method of claim 18, wherein transmitting the uplink transmission related information to the network device in the group reporting way comprises:
encoding the fourth information and the first information in a same group in adjacent bits; or
encoding the fourth information in each group in adjacent bits and encoding the first information in each group in adjacent bits.

20. A method for channel state information (CSI) reporting, performed by a network device, comprising:
transmitting CSI report indication information to a terminal device; and
receiving uplink transmission related information transmitted from the network device based on the CSI report indication information, wherein the uplink transmission related information corresponds to a first parameter set, and the first parameter set comprises one or more of the following:
a first resource, a first resource set, a first resource setting, a first report setting, or a first beam group.

21. The method of claim 20, wherein the CSI report indication information comprises:
first indication information, wherein the first indication information is used to indicate the terminal device to transmit the uplink transmission related information to the network device; or
second indication information, wherein the second indication information is used to indicate the terminal device to transmit uplink simultaneous transmission capability to the network device.

22. The method of claim 20, wherein the CSI report indication information comprises:
third indication information, wherein the third indication information is used to indicate the terminal device to transmit CSI, and the CSI comprises the uplink transmission related information; or
fourth indication information, wherein the fourth indication information is used to indicate the terminal device to transmit the uplink transmission related information when transmitting CSI.

23. The method of any of claims 20 to 22, wherein the uplink transmission related information comprises first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

24. The method of claim 23, wherein multiple pieces of first information comprised in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

25. The method of claim 23, wherein the uplink transmission related information comprises second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

26. The method of any of claims 23 to 25, wherein the uplink transmission related information comprises third information, and the third information is used to indicate whether one or more of the following are used for uplink transmission:
a first resource, a first resource set, a first resource setting, a first report setting, or a first beam group.

27. The method of claim 26, wherein the third information comprises information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

28. The method of claim 23, wherein the uplink transmission capability value comprises one or more of the following:
a number of SRS ports;
a number of multiple input multiple output (MIMO) layers; or
maximum power.

29. The method of claim 23, wherein the uplink transmission capability index comprises one or more of the following:
a number of SRS ports;
a number of multiple input multiple output (MIMO) layers; or
maximum power.

30. The method of claim 23, wherein receiving the uplink transmission related information transmitted from the network device based on the CSI report indication information comprises:
receiving the uplink transmission related information transmitted from the network device in a group reporting way.

31. The method of claim 30, wherein an uplink transmission capability value and/or an uplink transmission capability index corresponding to the first resource comprises:
an uplink transmission capability value and/or an uplink transmission capability index corresponding to the first resource in case that all resources in a group where the first resource belongs are used for uplink transmission.

32. The method of any of claims 26 to 30, wherein the uplink transmission related information comprises fourth information, and the fourth information is used to indicate an index of one or more of the following:
a first resource, a first resource set, a first resource setting, a first report setting, or a first beam group.

33. The method of claim 23, wherein receiving the uplink transmission related information transmitted from the network device based on the CSI report indication information comprises:
receiving the uplink transmission related information transmitted based on an order for transmitting the uplink transmission related information,
wherein the order for transmitting the uplink transmission related information is determined based on an order of one or more of a first resource, a first resource set, a first resource setting, a first report setting, or a first beam group.

34. The method of claim 33, wherein the order of one or more of the first resource, the first resource set, the first resource setting, the first report setting, or the first beam group comprises one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

35. The method of claim 34, wherein the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

36. The method of claim 20, wherein the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

37. The method of claim 32, wherein receiving the uplink transmission related information transmitted from the network device comprises:
encoding each piece of sub-information in the fourth information in adjacent bits, and encoding each piece of sub-information in the first information in adjacent bits, wherein an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

38. The method of claim 37, wherein receiving the uplink transmission related information transmitted from the network device in the group reporting way comprises:
encoding the fourth information and the first information in a same group in adjacent bits; or
encoding the fourth information in each group in adjacent bits and encoding the first information in each group in adjacent bits.

39. A terminal device, comprising a memory, a transceiver and a processor,
wherein the memory is used for storing a computer program, the transceiver is used for transmitting and receiving data under control of the processor, and the processor is used for reading the computer program in the memory and performing the following operations:
receiving channel state information (CSI) report indication information transmitted from a network device; and
transmitting uplink transmission related information to the network device based on the CSI report indication information, wherein the uplink transmission related information corresponds to a first parameter set, and the first parameter set comprises one or more of the following:
a first resource, a first resource set, a first resource setting, a first report setting, or a first beam group.

40. The terminal device of claim 39, wherein transmitting the uplink transmission related information to the network device based on the CSI report indication information comprises:
transmitting, by the terminal device, the uplink transmission related information to the network device based on the CSI report indication information used to indicate the terminal device to transmit the uplink transmission related information to the network device; or
transmitting, by the terminal device, the uplink transmission related information to the network device based on the CSI report indication information used to indicate the terminal device to transmit an uplink simultaneous transmission capability to the network device.

41. The terminal device of claim 39, wherein transmitting the uplink transmission related information to the network device based on the CSI report indication information comprises:
transmitting CSI to the network device based on the CSI report indication information, wherein the CSI comprises the uplink transmission related information; or
transmitting, based on the CSI report indication information, the uplink transmission related information and CSI to the network device simultaneously.

42. The terminal device of any of claims 39 to 41, wherein the uplink transmission related information comprises first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

43. The terminal device of claim 42, wherein multiple pieces of first information comprised in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

44. The terminal device of claim 42, wherein the uplink transmission related information comprises second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

45. The terminal device of any of claims 42 to 44, wherein the uplink transmission related information comprises third information, and the third information is used to indicate whether one or more of the following are used for uplink transmission:
a first resource, a first resource set, a first resource setting, a first report setting, or a first beam group.

46. The terminal device of claim 45, wherein the third information comprises information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

47. The terminal device of claim 42, wherein the uplink transmission capability value comprises one or more of the following:
a number of SRS ports;
a number of multiple input multiple output (MIMO) layers; or
maximum power.

48. The terminal device of claim 42, wherein the uplink transmission capability index comprises an index of uplink transmission capability corresponding to one or more of the following:
a number of SRS ports;
a number of multiple input multiple output (MIMO) layers; or
maximum power.

49. The terminal device of claim 42, wherein transmitting the uplink transmission related information to the network device based on the CSI report indication information comprises:
transmitting the uplink transmission related information to the network device in a group reporting way.

50. The terminal device of claim 49, wherein an uplink transmission capability value and/or an uplink transmission capability index corresponding to the first resource comprises:
an uplink transmission capability value and/or an uplink transmission capability index corresponding to the first resource in case that all resources in a group where the first resource belongs are used for uplink transmission.

51. The terminal device of any of claims 45 to 49, wherein the uplink transmission related information comprises fourth information, and the fourth information is used to indicate an index of one or more of the following:
a first resource, a first resource set, a first resource setting, a first report setting, or a first beam group.

52. The terminal device of claim 42, wherein transmitting the uplink transmission related information to the network device based on the CSI report indication information comprises:
determining an order for transmitting the uplink transmission related information based on an order of one or more of a first resource, a first resource set, a first resource setting, a first report setting, or a first beam group; and
transmitting the uplink transmission related information to the network device based on the order for transmitting the uplink transmission related information.

53. The terminal device of claim 52, wherein the order of one or more of the first resource, the first resource set, the first resource setting, the first report setting, or the first beam group comprises one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

54. The terminal device of claim 53, wherein the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

55. The terminal device of claim 39, wherein the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

56. The terminal device of claim 51, wherein transmitting the uplink transmission related information to the network device comprises:
encoding each piece of sub-information in the fourth information in adjacent bits, encoding each piece of sub-information in the first information in adjacent bits, and an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

57. The terminal device of claim 56, wherein transmitting the uplink transmission related information to the network device in the group reporting way comprises:
encoding the fourth information and the first information in a same group in adjacent bits; or
encoding the fourth information in each group in adjacent bits and encoding the first information in each group in adjacent bits.

58. A network device, comprising a memory, a transceiver and a processor,
wherein the memory is used for storing a computer program, the transceiver is used for transmitting and receiving data under control of the processor, and the processor is used for reading the computer program in the memory and performing the following operations:
transmitting channel state information (CSI) report indication information to a terminal device;
receiving uplink transmission related information transmitted from the network device based on the CSI report indication information, wherein the uplink transmission related information corresponds to a first parameter set, and the first parameter set comprises one or more of the following:
a first resource, a first resource set, a first resource setting, a first report setting, or a first beam group.

59. The network device of claim 58, wherein the CSI report indication information comprises:
first indication information, wherein the first indication information is used to indicate the terminal device to transmit the uplink transmission related information to the network device; or
second indication information, wherein the second indication information is used to indicate the terminal device to transmit uplink simultaneous transmission capability to the network device.

60. The network device of claim 58, wherein the CSI report indication information comprises:
third indication information, wherein the third indication information is used to indicate the terminal device to transmit CSI, and the CSI comprises the uplink transmission related information; or
fourth indication information, wherein the fourth indication information is used to indicate the terminal device to transmit the uplink transmission related information when transmitting CSI.

61. The network device of any of claims 58 to 60, wherein the uplink transmission related information comprises first information, and the first information is used to indicate one or more of the following:
an antenna panel index, a transmission and/or reception point (TRP) index, a sounding reference signal (SRS) resource set, a power control parameter, an uplink transmission capability index, an uplink transmission capability value, or a control resource set pool index.

62. The network device of claim 61, wherein multiple pieces of first information comprised in the uplink transmission related information corresponds to one or more of the following respectively:
at least one resource in the first resource;
at least one resource set in the first resource set;
at least one resource setting in the first resource setting;
at least one report setting in the first report setting; or
at least one beam group in the first beam group.

63. The network device of claim 61, wherein the uplink transmission related information comprises second information, and the second information is used to indicate a number of one or more of an antenna panel corresponding to the first parameter set, a TRP index corresponding to the first parameter set, an SRS resource set corresponding to the first parameter set, a power control parameter corresponding to the first parameter set, an uplink transmission capability index corresponding to the first parameter set, an uplink transmission capability value corresponding to the first parameter set, or a control resource set pool corresponding to the first parameter set.

64. The network device of any of claims 61 to 63, wherein the uplink transmission related information comprises third information, and the third information is used to indicate whether one or more of the following are used for uplink transmission:
a first resource, a first resource set, a first resource setting, a first report setting, or a first beam group.

65. The network device of claim 64, wherein the third information comprises information for indicating whether one or more of the following is used as a quasi co-location (QCL) source reference signal for uplink transmission, a spatial relation source reference signal for uplink transmission, or a path loss reference signal for uplink transmission:
a first resource, a first resource set, a first resource setting, a first report setting, or a first beam group.

66. The network device of claim 61, wherein the uplink transmission capability value comprises one or more of the following:
a number of SRS ports;
a number of multiple input multiple output (MIMO) layers; or
maximum power.

67. The network device of claim 61, wherein the uplink transmission capability index comprises one or more of the following:
a number of SRS ports;
a number of multiple input multiple output (MIMO) layers; or
maximum power.

68. The network device of claim 61, wherein receiving the uplink transmission related information transmitted from the network device based on the CSI report indication information comprises:
receiving the uplink transmission related information transmitted from the network device in a group reporting way.

69. The network device of claim 68, wherein an uplink transmission capability value and/or an uplink transmission capability index corresponding to the first resource comprises:
an uplink transmission capability value and/or an uplink transmission capability index corresponding to the first resource in case that all resources in a group where the first resource belongs are used for uplink transmission.

70. The network device of any of claims 64 to 68, wherein the uplink transmission related information comprises fourth information, and the fourth information is used to indicate an index of one or more of the following:
a first resource, a first resource set, a first resource setting, a first report setting, or a first beam group.

71. The network device of claim 61, wherein receiving the uplink transmission related information transmitted from the network device based on the CSI report indication information comprises:
receiving the uplink transmission related information transmitted based on an order for transmitting the uplink transmission related information,
wherein the order for transmitting the uplink transmission related information is determined based on an order of one or more of a first resource, a first resource set, a first resource setting, a first report setting, or a first beam group.

72. The network device of claim 71, wherein the order of one or more of the first resource, the first resource set, the first resource setting, the first report setting, or the first beam group comprises one or more of the following:
a reporting order of a channel quality corresponding to an index of the first resource and/or the first resource, a size order of an index of the first resource, or an order in which the first resource is configured in a corresponding resource set;
a reporting order of an index of the first resource set, a size order of an index of the first resource set, an order of a resource setting corresponding to the first resource set, an order of a report setting corresponding to the first resource set, an order in which the first resource set is configured in a corresponding resource setting, or a reporting order of an index and/or channel quality of a second resource corresponding to the first resource set;
a reporting order of an index of the first resource setting, a size order of an index of the first resource setting, a reporting order of an index and/or channel quality of a second resource corresponding to the first resource setting, a size order of an index of a second resource corresponding to the first resource setting, or an order in which the first resource set is configured in a corresponding report setting;
a reporting order of an index of the first report setting, a size order of an index of the first report setting, a reporting order of an index and/or a channel quality of a second resource corresponding to the first report setting, a size order of an index of a second resource corresponding to the first report setting, an order of an index of a second resource set corresponding to the first report setting, or a setting order of a second resource set corresponding to the first report setting; or
a reporting order of an index of the first beam group, a size order of an index of the first beam group, a reporting order of an index and/or a channel quality of a second resource corresponding to the first beam group, a size order of an index of a second resource corresponding to the first beam group, a size order of an index of a second resource set corresponding to the first beam group, or a setting order of a second resource set corresponding to the first beam group.

73. The network device of claim 72, wherein the second resource is a resource for one or more of a CSI report identifier, a channel quality, a pre-coding matrix indicator (PMI), a rank indicator (RI), or a channel quality indicator (CQI); and
the second resource set is a resource set for at least one of resource identifiers corresponding to the CSI report identifier, the channel quality, the PMI, the RI, and the CQI.

74. The network device of claim 58, wherein the first resource is a resource for one or more of a CSI report identifier, a channel quality, a pre-coding matrix indicator (PMI), a rank indicator (RI), or a channel quality indicator (CQI);
the first resource set is a CSI resource set for channel measurement corresponding to a CSI;
the first resource setting is a resource setting for channel measurement corresponding to the CSI;
the first report setting is a report setting corresponding to the CSI; and
the first beam group is a beam group for at least one of a beam group identifier, a channel quality, a PMI, an RI, or a CQI reported in the CSI.

75. The network device of claim 70, wherein receiving the uplink transmission related information transmitted from the network device comprises:
encoding each piece of sub-information in the fourth information in adjacent bits, and encoding each piece of sub-information in the first information in adjacent bits, wherein an encoding order of each piece of the sub-information in the fourth information corresponds to an encoding order of each piece of the sub-information in the first information one by one; or
encoding each piece of sub-information in the fourth information and each piece of sub-information in the first information corresponding to each piece of sub-information in the fourth information in adjacent bits.

76. The network device of claim 75, wherein receiving the uplink transmission related information transmitted from the network device in the group reporting way comprises:
encoding the fourth information and the first information in a same group in adjacent bits; or
encoding the fourth information in each group in adjacent bits and encoding the first information in each group in adjacent bits.

77. An apparatus for channel state information (CSI) reporting, comprising:
a CSI report indication information receiving unit, used for receiving CSI report indication information transmitted from a network device; and
an uplink transmission related information transmitting unit, used for transmitting uplink transmission related information to the network device based on the CSI report indication information, wherein the uplink transmission related information corresponds to a first parameter set, and the first parameter set comprises one or more of the following:
a first resource, a first resource set, a first resource setting, a first report setting, or a first beam group.

78. An apparatus for channel state information (CSI) reporting, comprising:
a CSI report indication information transmitting unit, used for transmitting CSI report indication information to a terminal device; and
an uplink transmission related information receiving unit, used for receiving uplink transmission related information transmitted from the network device based on the CSI report indication information, wherein the uplink transmission related information corresponds to a first parameter set, and the first parameter set comprises one or more of the following:
a first resource, a first resource set, a first resource setting, a first report setting, or a first beam group.

79. A computer readable storage medium storing a computer program, wherein the computer program is used to cause a computer to perform the method of any of claims 1 to 19, or perform the method of any of claims 20 to 38.
